(19)

Europäisches
Patentamt
European
Patent Office
Office européen
des brevets

(11) **EP 4 600 909 A1**

(12) **EUROPEAN PATENT APPLICATION**
published in accordance with Art. 153(4) EPC

(43) Date of publication:
**13.08.2025  Bulletin 2025/33**

(21) Application number: **23884815.4**

(22) Date of filing: **30.10.2023**

(51) International Patent Classification (IPC):
***G06T 11/20*** (2006.01)

(52) Cooperative Patent Classification (CPC):
**G06F 16/29; G06T 7/66; G06T 11/20**

(86) International application number:
**PCT/CN2023/127607**

(87) International publication number:
**WO 2024/093884 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022  CN 202211350487**

(71) Applicant: **Shenzhen Yinwang Intelligent
Technologies Co., Ltd.
Shenzhen, Guangdong 518129 (CN)**

(72) Inventors:
• **WANG, Yufei
Shenzhen, Guangdong 518129 (CN)**
• **CHEN, Yuan
Shenzhen, Guangdong 518129 (CN)**

(74) Representative: **Maiwald GmbH
Engineering
Elisenhof
Elisenstrasse 3
80335 München (DE)**

(54) **VIRTUAL LANE GENERATION METHOD AND RELATED APPARATUS**

(57)    This application provides a virtual lane generation method and a related apparatus, applied to the field of electronic maps. The method includes: obtaining detection data of a first physical area, vehicle trajectory points corresponding to a first work task, and a road configuration parameter; and constructing a virtual lane based on the detection data of the first physical area, the vehicle trajectory points corresponding to the first work task, and the road configuration parameter, where the virtual lane corresponds to at least the first work task. Through implementation of this application, a virtual lane can be generated in an open road scenario without a real lane line, to improve mapping efficiency.

FIG. 5

EP 4 600 909 A1

## Description

This application claims priority to Chinese Patent Application No. 202211350487.7, filed with the China National Intellectual Property Administration on October 31, 2022 and entitled "VIRTUAL LANE GENERATION METHOD AND RELATED APPARATUS", which is incorporated herein by reference in its entirety.

## TECHNICAL FIELD

This application relates to the field of electronic maps, and in particular, to a virtual lane generation method and a related apparatus.

## BACKGROUND

As an important part of an autonomous driving system, a high-definition map can effectively improve driving safety of an autonomous vehicle, and strengthen an overall sensing capability and a decision-making capability of the autonomous driving system. The high-definition map stores a large amount of driving assistance information as structured data for reference in a driving process of the autonomous vehicle, for example, lane information such as a location, a type, a width, a gradient, and a curvature of a lane line. In an existing mapping process, real lane lines in the physical world need to be sensed first, and then road modeling is performed based on the sensed lane lines. However, for open road scenarios without real lane lines, such as mining areas, there is no automatic mapping solution currently.

## SUMMARY

This application provides a virtual lane generation method and a related apparatus, to generate a virtual lane in an open road scenario without a real lane line, so as to improve mapping efficiency.

According to a first aspect, this application provides a virtual lane generation method. The method includes:

obtaining detection data of a first physical area, vehicle trajectory points corresponding to a first work task, and a road configuration parameter; and

constructing a virtual lane based on the detection data of the first physical area, the vehicle trajectory points corresponding to the first work task, and the road configuration parameter, where the virtual lane corresponds to at least the first work task.

In this application, the detection data of the first physical area, the vehicle trajectory points corresponding to the first work task, and the road configuration parameter are obtained to construct the virtual lane, so that a virtual lane can be generated in an open road scenario without a real lane line, to improve mapping efficiency. It may be understood that the virtual lane in this application may be understood as including a lane center line and/or a lane line of the virtual lane.

In a possible implementation, the constructing a virtual lane based on the detection data of the first physical area, the vehicle trajectory points corresponding to the first work task, and the road configuration parameter includes:

generating a lane center line of the virtual lane based on the detection data of the first physical area and the vehicle trajectory points corresponding to the first work task; and

constructing the virtual lane based on the lane center line and the road configuration parameter.

In this implementation, the lane center line of the virtual lane may be first generated based on the detection data of the first physical area and the vehicle trajectory points, and then the virtual lane is constructed based on the lane center line and the road configuration parameter. This is highly operable.

In a possible implementation, the generating a lane center line of the virtual lane based on the detection data of the first physical area and the vehicle trajectory points corresponding to the first work task includes:

determining a drivable area in the first physical area based on the detection data of the first physical area; and

determining the lane center line in the drivable area based on the vehicle trajectory points corresponding to the first work task.

In this implementation, the lane center line is generated in the drivable area in the first physical area, so that collision/overlapping between the lane center line and a curb and/or an obstacle in the first physical area can be avoided.

In a possible implementation, the determining a drivable area in the first physical area based on the detection data of the first physical area includes:

determining the drivable area in the first physical area on a grid map of the first physical area based on the detection data of the first physical area and the grid map of the first physical area.

In this implementation, the drivable area may be obtained by using the grid map. This is highly operable.

In a possible implementation, the determining the drivable area in the first physical area on a grid map of the first physical area based on the detection data of the first physical area and the grid map of the first physical area includes:

extracting road information from the detection data of the first physical area, where the road information includes curb information and/or obstacle information; and

projecting the road information to the grid map of the first physical area, to obtain the drivable area in the first physical area.

In a possible implementation, the determining the lane center line in the drivable area based on the vehicle trajectory points corresponding to the first work task includes:

generating an initial lane center line in the drivable area based on the vehicle trajectory points corresponding to the first work task; and

obtaining the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In this implementation, the initial lane center line may be optimized by using the vehicle dynamics configuration parameter, to obtain the lane center line. It may be understood that this optimization manner in which vehicle dynamics are considered is more suitable for an actual use scenario, and is conducive to vehicle control when a vehicle end actually uses a map.

In a possible implementation, the lane center line satisfies one or more of the following features:

a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, the obtaining vehicle trajectory points corresponding to a first work task includes:

obtaining the vehicle trajectory points that are entered by a user and that correspond to the first work task; or generating the vehicle trajectory points corresponding to the first work task.

In this implementation, the vehicle trajectory points may be configured by the user on a visual interface, or the vehicle trajectory points may be automatically generated. There are various implementations, and applicability is high.

In a possible implementation, the obtaining a road configuration parameter includes:

obtaining the road configuration parameter entered by a user.

In this implementation, the road configuration parameter may be configured by the user on a visual interface.

In a possible implementation, a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the method further includes:

sending first indication information, where the first indication information indicates to display a lane line of the virtual lane and/or the lane center line of the virtual lane.

In a possible implementation, the virtual lane includes the lane line of the virtual lane and the lane center line of the virtual lane.

According to a second aspect, this application provides a virtual lane generation method. The method includes:

obtaining detection data of a first physical area and vehicle trajectory points corresponding to a first work task; and generating a lane center line of a virtual lane based on the detection data of the first physical area and the vehicle trajectory points corresponding to the first work task.

In a possible implementation, the method further includes:

obtaining a road configuration parameter; and
constructing the virtual lane based on the lane center line and the road configuration parameter, where the virtual lane corresponds to at least the first work task.

In a possible implementation, the generating a lane center line of a virtual lane based on the detection data of the first physical area and the vehicle trajectory points corresponding to the first work task includes:

determining a drivable area in the first physical area based on the detection data of the first physical area; and
determining the lane center line in the drivable area based on the vehicle trajectory points corresponding to the first work task.

In a possible implementation, the determining a drivable area in the first physical area based on the detection data of the first physical area includes:
determining the drivable area in the first physical area on a grid map of the first physical area based on the detection data of the first physical area and the grid map of the first physical area.

In a possible implementation, the determining the drivable area in the first physical area on a grid map of the first physical area based on the detection data of the first physical area and the grid map of the first physical area includes:

extracting road information from the detection data of the first physical area, where the road information includes curb information and/or obstacle information; and
projecting the road information to the grid map of the first physical area, to obtain the drivable area in the first physical area.

In a possible implementation, the determining the lane center line in the drivable area based on the vehicle trajectory points corresponding to the first work task includes:

generating an initial lane center line in the drivable area based on the vehicle trajectory points corresponding to the first work task; and
obtaining the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In a possible implementation, the lane center line satisfies one or more of the following features:
a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, the obtaining vehicle trajectory points corresponding to a first work task includes:

obtaining the vehicle trajectory points that are entered by a user and that correspond to the first work task; or
generating the vehicle trajectory points corresponding to the first work task.

In a possible implementation, the obtaining a road configuration parameter includes:
obtaining the road configuration parameter entered by a user.

In a possible implementation, the road configuration parameter includes one or more of the following:
a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the method further includes:
sending first indication information, where the first indication information indicates to display a lane line of the virtual lane and/or the lane center line of the virtual lane.

In a possible implementation, the virtual lane includes the lane line of the virtual lane and the lane center line of the virtual lane.

According to a third aspect, this application provides a virtual lane generation method. The method includes:

receiving a road configuration parameter entered by a user, where the road configuration parameter is used to construct a virtual lane corresponding to a first work task;

sending the road configuration parameter to obtain the virtual lane; and

displaying a lane line of the virtual lane and/or a lane center line of the virtual lane.

In a possible implementation, the virtual lane is associated with the road configuration parameter, detection data of a first physical area, and vehicle trajectory points corresponding to the first work task.

In a possible implementation, the lane center line of the virtual lane is associated with the detection data of the first physical area and the vehicle trajectory points corresponding to the first work task.

In a possible implementation, the method further includes:

receiving the vehicle trajectory points that are entered by the user and that correspond to the first work task; and

sending the vehicle trajectory points corresponding to the first work task.

In a possible implementation, the method further includes:

displaying a drivable area that is of the first physical area and that corresponds to the detection data of the first physical area, where the drivable area is used to determine the lane center line of the virtual lane.

In a possible implementation, the method further includes:

receiving a vehicle dynamics configuration parameter entered by the user, where the vehicle dynamics configuration parameter includes one or more of the following parameters: a minimum turning radius $R_{min}$, a maximum steering wheel rotation speed $\omega_{mmax}$, and a road surface friction coefficient $\mu$, and the vehicle dynamics configuration parameter is used to determine the lane center line; and

sending the vehicle dynamics configuration parameter.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, the road configuration parameter includes one or more of the following:

a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

According to a fourth aspect, this application provides a virtual lane generation apparatus. The apparatus includes:

an obtaining unit, configured to obtain detection data of a first physical area, vehicle trajectory points corresponding to a first work task, and a road configuration parameter; and

a processing unit, configured to construct a virtual lane based on the detection data of the first physical area, the vehicle trajectory points corresponding to the first work task, and the road configuration parameter, where the virtual lane corresponds to at least the first work task.

In a possible implementation, when constructing the virtual lane based on the detection data of the first physical area, the vehicle trajectory points corresponding to the first work task, and the road configuration parameter, the processing unit is configured to:

generate a lane center line of the virtual lane based on the detection data of the first physical area and the vehicle trajectory points corresponding to the first work task; and

construct the virtual lane based on the lane center line and the road configuration parameter.

In a possible implementation, when generating the lane center line of the virtual lane based on the detection data of the first physical area and the vehicle trajectory points corresponding to the first work task, the processing unit is configured to:

determine a drivable area in the first physical area based on the detection data of the first physical area; and

determine the lane center line in the drivable area based on the vehicle trajectory points corresponding to the first work task.

In a possible implementation, when determining the drivable area in the first physical area based on the detection data of the first physical area, the processing unit is configured to:
determine the drivable area in the first physical area on a grid map of the first physical area based on the detection data of the first physical area and the grid map of the first physical area.

In a possible implementation, when determining the drivable area in the first physical area on the grid map of the first physical area based on the detection data of the first physical area and the grid map of the first physical area, the processing unit is configured to:

extract road information from the detection data of the first physical area, where the road information includes curb information and/or obstacle information; and
project the road information to the grid map of the first physical area, to obtain the drivable area in the first physical area.

In a possible implementation, when determining the lane center line in the drivable area based on the vehicle trajectory points corresponding to the first work task, the processing unit is configured to:

generate an initial lane center line in the drivable area based on the vehicle trajectory points corresponding to the first work task; and
obtain the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In a possible implementation, the lane center line satisfies one or more of the following features:
a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, when obtaining the vehicle trajectory points corresponding to the first work task, the obtaining unit is configured to:

obtain the vehicle trajectory points that are entered by a user and that correspond to the first work task; or
generate the vehicle trajectory points corresponding to the first work task.

In a possible implementation, when obtaining the road configuration parameter, the obtaining unit is configured to:
obtain the road configuration parameter entered by a user.

In a possible implementation, the road configuration parameter includes one or more of the following:
a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the apparatus further includes:
a transceiver unit, configured to send first indication information, where the first indication information indicates to display a lane line of the virtual lane and/or the lane center line of the virtual lane.

In a possible implementation, the virtual lane includes the lane line of the virtual lane and the lane center line of the virtual lane.

According to a fifth aspect, this application provides a virtual lane generation apparatus. The apparatus includes:

an obtaining unit, configured to obtain detection data of a first physical area and vehicle trajectory points corresponding to a first work task; and
a processing unit, configured to generate a lane center line of a virtual lane based on the detection data of the first physical area and the vehicle trajectory points corresponding to the first work task.

In a possible implementation, the obtaining unit is further configured to obtain a road configuration parameter.

The processing unit is further configured to construct the virtual lane based on the lane center line and the road configuration parameter, where the virtual lane corresponds to at least the first work task.

In a possible implementation, when generating the lane center line of the virtual lane based on the detection data of the first physical area and the vehicle trajectory points corresponding to the first work task, the processing unit is configured to:

determine a drivable area in the first physical area based on the detection data of the first physical area; and determine the lane center line in the drivable area based on the vehicle trajectory points corresponding to the first work task.

In a possible implementation, when determining the drivable area in the first physical area based on the detection data of the first physical area, the processing unit is configured to:
determine the drivable area in the first physical area on a grid map of the first physical area based on the detection data of the first physical area and the grid map of the first physical area.

In a possible implementation, when determining the drivable area in the first physical area on the grid map of the first physical area based on the detection data of the first physical area and the grid map of the first physical area, the processing unit is configured to:

extract road information from the detection data of the first physical area, where the road information includes curb information and/or obstacle information; and project the road information to the grid map of the first physical area, to obtain the drivable area in the first physical area.

In a possible implementation, when determining the lane center line in the drivable area based on the vehicle trajectory points corresponding to the first work task, the processing unit is configured to:

generate an initial lane center line in the drivable area based on the vehicle trajectory points corresponding to the first work task; and obtain the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In a possible implementation, the lane center line satisfies one or more of the following features:
a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, when obtaining the vehicle trajectory points corresponding to the first work task, the obtaining unit is configured to:

obtain the vehicle trajectory points that are entered by a user and that correspond to the first work task; or generate the vehicle trajectory points corresponding to the first work task.

In a possible implementation, when obtaining the road configuration parameter, the obtaining unit is configured to:
obtain the road configuration parameter entered by a user.

In a possible implementation, the road configuration parameter includes one or more of the following:
a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the apparatus further includes:
a transceiver unit, configured to send first indication information, where the first indication information indicates to display a lane line of the virtual lane and/or the lane center line of the virtual lane.

In a possible implementation, the virtual lane includes the lane line of the virtual lane and the lane center line of the virtual lane.

According to a sixth aspect, this application provides a virtual lane generation apparatus. The apparatus includes:

a transceiver unit, configured to receive a road configuration parameter entered by a user, where the road configuration parameter is used to construct a virtual lane corresponding to a first work task, where the transceiver unit is configured to send the road configuration parameter to obtain the virtual lane; and a display unit, configured to display a lane line of the virtual lane and/or a lane center line of the virtual lane.

In a possible implementation, the virtual lane is associated with the road configuration parameter, detection data of a first physical area, and vehicle trajectory points corresponding to the first work task.

In a possible implementation, the lane center line of the virtual lane is associated with the detection data of the first physical area and the vehicle trajectory points corresponding to the first work task.

In a possible implementation, the transceiver unit is further configured to:

receive the vehicle trajectory points that are entered by the user and that correspond to the first work task; and send the vehicle trajectory points corresponding to the first work task.

In a possible implementation, the display unit is further configured to:
display a drivable area that is of the first physical area and that corresponds to the detection data of the first physical area, where the drivable area is used to determine the lane center line of the virtual lane.

In a possible implementation, the transceiver unit is further configured to:

receive a vehicle dynamics configuration parameter entered by the user, where the vehicle dynamics configuration parameter includes one or more of the following parameters: a minimum turning radius $R_{min}$, a maximum steering wheel rotation speed $\omega_{mmax}$, and a road surface friction coefficient $\mu$, and the vehicle dynamics configuration parameter is used to determine the lane center line; and send the vehicle dynamics configuration parameter.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, the road configuration parameter includes one or more of the following:
a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

According to a seventh aspect, this application provides a virtual lane generation apparatus. The apparatus may be a cloud platform (for example, the cloud platform may be a server like a cloud server), or may be an apparatus on the cloud platform, or may be an apparatus that can be used together with the cloud platform. The virtual lane generation apparatus may alternatively be a chip system. The virtual lane generation apparatus may perform the method according to the first aspect and/or the method according to the second aspect. A function of the virtual lane generation apparatus may be implemented by hardware, or may be implemented by hardware by executing corresponding software. The hardware or the software includes one or more units or modules corresponding to the foregoing function. The unit or module may be software and/or hardware. For operations performed by the virtual lane generation apparatus and beneficial effects thereof, refer to the method according to the first aspect and/or the method according to the second aspect and beneficial effects thereof. Repeated parts are not described again.

According to an eighth aspect, this application provides a virtual lane generation apparatus. The apparatus may be a client, or may be an apparatus in the client, or may be an apparatus that can be used together with the client. A function of the virtual lane generation apparatus may be implemented by hardware, or may be implemented by hardware by executing corresponding software. The hardware or the software includes one or more units or modules corresponding to the foregoing function. The unit or module may be software and/or hardware. For operations performed by the virtual lane generation apparatus and beneficial effects thereof, refer to the method according to the third aspect and beneficial effects thereof. Repeated parts are not described again.

According to a ninth aspect, this application provides a virtual lane generation apparatus. The apparatus may be a cloud platform. The virtual lane generation apparatus includes a processor and a transceiver. The processor and the transceiver are configured to execute a computer program or instructions stored in at least one memory, so that the apparatus implements the method according to any implementation of the first aspect and/or the second aspect.

EP 4 600 909 A1

According to a tenth aspect, this application provides a virtual lane generation apparatus. The apparatus may be a cloud platform, and the virtual lane generation apparatus includes a processor, a transceiver, and a memory. The processor, the transceiver, and the memory are coupled. The processor and the transceiver are configured to implement the method according to any implementation of the first aspect and/or the second aspect. Optionally, the memory and the processor may be integrated together. Optionally, the apparatus may further include a display and the like. This is not limited herein.

According to an eleventh aspect, this application provides a virtual lane generation apparatus. The apparatus may be a client. The virtual lane generation apparatus includes a display and a transceiver. The display and the transceiver are configured to execute a computer program or instructions stored in at least one memory, so that the apparatus implements the method according to any implementation of the third aspect.

According to a twelfth aspect, this application provides a virtual lane generation apparatus. The apparatus may be a cloud platform, and the virtual lane generation apparatus includes a display, a transceiver, and a memory. The display, the transceiver, and the memory are coupled. The display and the transceiver are configured to implement the method according to any implementation of the third aspect. Optionally, the apparatus may further include a processor and the like. This is not limited herein.

According to a thirteenth aspect, this application provides a computer-readable storage medium. The storage medium stores a computer program or instructions. When the computer program or the instructions are executed by a computer, the method according to any implementation of the first aspect, the second aspect, and/or the third aspect is implemented.

According to a fourteenth aspect, this application provides a computer program product including instructions. The computer program product includes computer program code. When the computer program code is run on a computer, the method according to any implementation of the first aspect, the second aspect, and/or the third aspect is implemented.

## BRIEF DESCRIPTION OF DRAWINGS

FIG. 1 is a schematic flowchart of a virtual lane generation method according to an embodiment of this application;
FIG. 2 is a diagram of a scenario of obtaining a road configuration parameter entered by a user according to an embodiment of this application;
FIG. 3 is a diagram of a scenario of obtaining vehicle trajectory points entered by a user according to an embodiment of this application;
FIG. 4 is a diagram of a virtual lane scenario according to an embodiment of this application;
FIG. 5 is a diagram of extracting road information according to an embodiment of this application;
FIG. 6 is a diagram of a drivable area on a grid map according to an embodiment of this application;
FIG. 7 is a diagram of a scenario of an initial lane center line and a lane center line according to an embodiment of this application;
FIG. 8 is a diagram of another scenario of an initial lane center line and a lane center line according to an embodiment of this application;
FIG. 9 is another schematic flowchart of a virtual lane generation method according to an embodiment of this application;
FIG. 10 is a diagram of a possible structure of a data processing apparatus according to an embodiment of this application;
FIG. 11 is a diagram of another possible structure of a data processing apparatus according to an embodiment of this application; and
FIG. 12 is a diagram of another possible structure of a data processing apparatus according to an embodiment of this application.

## DESCRIPTION OF EMBODIMENTS

The following describes embodiments of this application with reference to the accompanying drawings in embodiments of this application.

In the specification, claims, and accompanying drawings of this application, the terms such as "first", "second", "third", and "fourth" are intended to distinguish between different objects but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using the signal).

Some terms in this application are first described, to help a person skilled in the art have a better understanding.

1. Work task

In a mining area scenario, the work task includes an excavation work task, a dumping work task, a water spraying work task, and the like.

2. Lane center line

The lane center line usually reflects a plane location and a curve change of a lane. In an autonomous driving scenario, the lane center line is usually used to guide a driving trajectory of a vehicle.

3. Lane line

The lane line is also referred to as a lane boundary. The lane line is a traffic marking line used to separate traffic flows that travel in a same direction, and is usually a white dashed or solid line or a yellow dashed or solid line. The white dashed line is used to separate co-directional vehicles, and a lane change and overtaking are available under safe conditions. The white solid line is also used to separate co-directional vehicles, but a lane change is not available.

4. High-definition map (high-definition map, HD MAP)

The high-definition map is also referred to as a high-precision map. As one of key capabilities for implementing autonomous driving, the high-definition map becomes an effective supplement to existing autonomous driving sensors, and improves safety of autonomous driving decision-making of a vehicle. Compared with a conventional navigation map, the high-definition map that serves autonomous driving has higher requirements in all aspects and can cooperate with sensors and algorithms to support decision-making. The high-definition map includes a static layer part and a dynamic layer part. The static layer part mainly refers to some target objects that conventionally remain stationary on the high-definition map, and may include roads, lanes, intersections, road signs, road auxiliary facilities such as traffic signs and traffic lights, and the like. The dynamic layer part refers to dynamic information that is changing or may change in an autonomous driving process, namely, dynamically changing event information, such as changing traffic flows, real-time road conditions, and data that needs to be pushed or updated in real time, such as road repair or road closure. The following embodiments of this application mainly describe a method for constructing a lane (or referred to as a virtual lane) on the high-definition map.

5. Grid map

The grid map is also referred to as an occupancy grid map, and may reflect curb information and/or obstacle information in a detection area. In other words, the grid map may be used to describe/represent a drivable area and/or a non-drivable area in a physical area. Division of the non-drivable area/drivable area may be determined based mainly on whether there is a static obstacle. Certainly, a dynamic change may also occur. For example, a roadblock is detected at a location at some time, but after a period of time, the roadblock at the location is cleared. Generally, the detection area is divided into a specific quantity of grids of a specific size. Probabilities of occupation of all the grids are determined based on a detection result of a detector, and the probabilities of occupation of all the grids are reflected to corresponding grids in the detection area, so that a drivable area and/or a non-drivable area on the grid map can be obtained. The detector may be a point cloud sensor or the like.

It should be noted that, as an important part of an autonomous driving system, a high-definition map can effectively improve driving safety of an autonomous vehicle, and strengthen an overall sensing capability and a decision-making capability of the autonomous driving system, and is an important part for implementing autonomous driving. The high-definition map stores a large amount of driving assistance information as structured data for reference in a driving process of the autonomous vehicle, for example, lane information such as a location, a type, a width, a gradient, and a curvature of a lane line. In other words, in an existing mapping process, real lane lines in the physical world need to be sensed first, and then road modeling is performed based on the sensed lane lines.

In common road scenarios such as highways and towns, when making a high-definition map, only clear road boundaries (namely, lane lines) need to be sensed to reproduce real roads in the physical world. However, in scenarios without lane lines, such as mining areas, highway toll gates, and ports, automatic mapping cannot be implemented because there is no clear lane line.

In view of this, this application provides a virtual lane generation method, to generate a virtual lane in an open road scenario without a real lane line, so as to improve mapping efficiency.

The following describes a virtual lane generation method and a related apparatus provided in embodiments of this application.

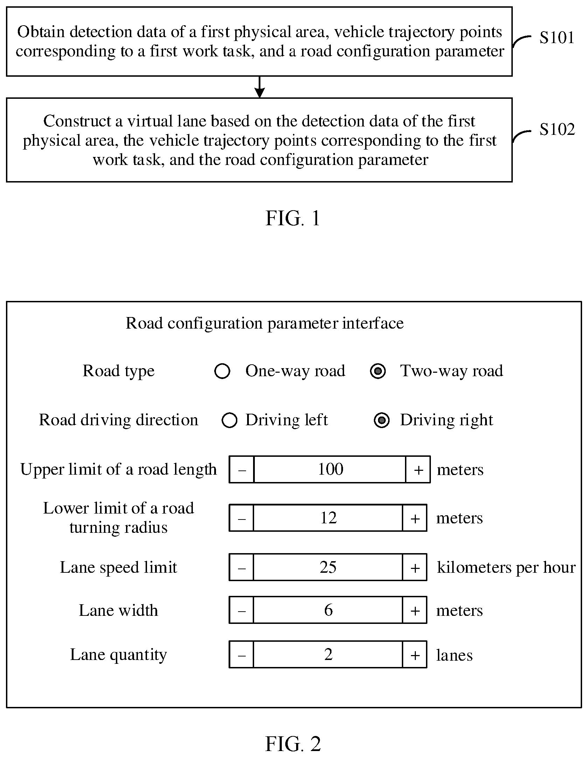

FIG. 1 is a schematic flowchart of a virtual lane generation method according to an embodiment of this application. The method is performed by a controller or a server. The controller or the server herein may be a cloud platform, a cloud server, or the like. This is not limited herein. For ease of description, in the following descriptions, an example in which the method is performed by the controller or the server that is a cloud platform is mainly used for description. The method may include the following steps S101 and S102.

S101: Obtain detection data of a first physical area, vehicle trajectory points corresponding to a first work task, and a road configuration parameter.

Herein, the detection data of the first physical area may include image data, point cloud data, and/or the like of the first physical area. This is not limited herein. Generally, the image data may be collected based on an image sensor and sent to the cloud platform, and the point cloud data may be collected based on a point cloud sensor and sent to the cloud platform. The first physical area may be understood as a to-be-drawn area in a real world/physical world, for example, a mining area, a highway toll gate, or a port. This is not limited herein. The first work task may be understood as an excavation work task, a dumping work task, a water spraying work task, or the like. This is not limited herein. The road configuration parameter may be understood as including one or more of the following: a lane width, a lane quantity, a road driving direction, a road type, an upper limit of a lane length, a lower limit of a road turning radius, and a lane speed limit. The road driving direction includes driving left or driving right, and the road type includes a one-way road or a two-way road. It may be understood that the first physical area includes a work area corresponding to the first work task, or the first physical area includes an area associated with the work area corresponding to the first work task.

It should be noted that, that the cloud platform obtains the road configuration parameter may be understood as obtaining the road configuration parameter entered by a user. Herein, the road configuration parameter entered by the user may be a road configuration parameter that is entered/selected by the user on a user interface/visual interface. For example, FIG. 2 is a diagram of a scenario of obtaining the road configuration parameter entered by the user according to an embodiment of this application. As shown in FIG. 2, road parameters that can be configured on a road configuration parameter interface include a road type, a road driving direction, an upper limit of a road length, a lower limit of a road turning radius, a lane speed limit, a lane width, and a lane quantity. The road type that can be selected includes a one-way road or a two-way road. The road direction that can be selected includes driving left or driving right. The upper limit of the road length may be selected based on an actual requirement, for example, 100 meters. The lower limit of the road turning radius may be selected based on an actual requirement, for example, 12 meters. The lane speed limit may be selected based on an actual requirement, for example, 25 kilometers per hour. The lane width may be selected based on an actual requirement, for example, 6 meters. The lane width may be selected based on an actual requirement, for example, 2 lanes. It should be noted that the user interface/visual interface in this embodiment of this application may be a user interface/visual interface of a client. The client described herein may be another device or software and hardware that are independent of the cloud platform, and the client interacts with the cloud platform through a communication port. Optionally, the user interface/visual interface in this embodiment of this application may alternatively be a user interface/visual interface provided by the cloud platform. In other words, the client is integrated with the cloud platform. Therefore, interaction between the user interface/visual interface and the cloud platform is implemented internally, and is specifically determined based on an actual scenario. This is not limited herein.

It should be noted that, that the cloud platform obtains the vehicle trajectory points corresponding to the first work task may be understood as obtaining the vehicle trajectory points that are entered by the user and that correspond to the first work task, for example, obtaining vehicle trajectory points that are entered/selected by the user on the user interface/visual interface. The vehicle trajectory points that are displayed on the user interface/visual interface and that correspond to the first work task and can be selected may be a vehicle trajectory collected by a collection vehicle, or the vehicle trajectory points that are displayed on the user interface/visual interface and that correspond to the first work task and can be selected may be a vehicle trajectory provided by a vehicle that executes the first work task.

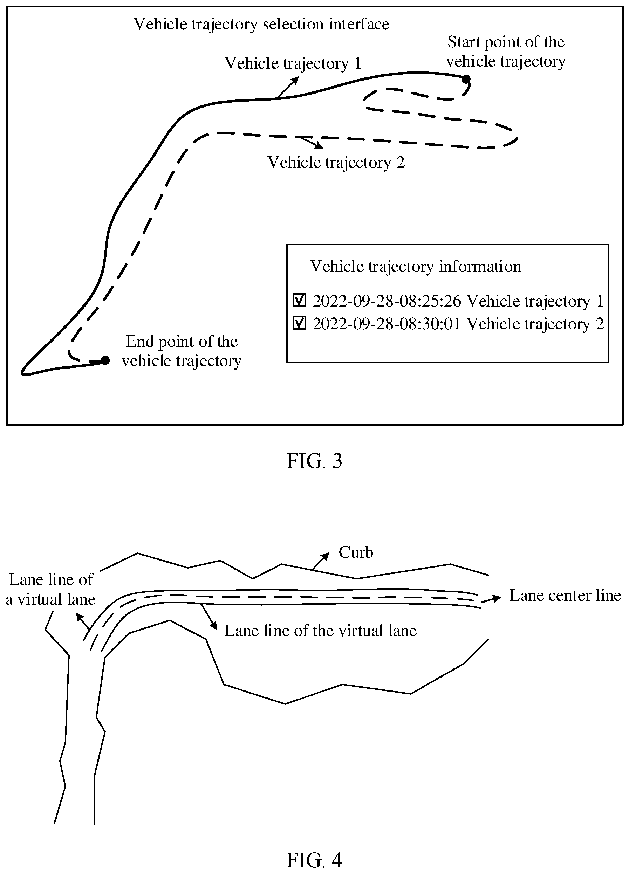

For example, FIG. 3 is a diagram of a scenario of obtaining the vehicle trajectory points entered by the user according to an embodiment of this application. As shown in FIG. 3, a plurality of vehicle trajectories may be displayed on a vehicle trajectory selection interface, for example, a vehicle trajectory 1 and a vehicle trajectory 2. A start point and an end point of the vehicle trajectory 1 are the same as those of the vehicle trajectory 2. Optionally, the vehicle trajectory selection interface may further include vehicle trajectory information, and the vehicle trajectory information includes information about a plurality of vehicle trajectories collected by the collection vehicle. Therefore, the user may select, from the vehicle trajectory information, a vehicle trajectory that needs to be displayed on the vehicle trajectory selection interface. Optionally, start points and/or end points of the vehicle trajectories displayed on the vehicle trajectory selection interface may alternatively be different. This is specifically determined based on an actual scenario, and is not limited herein.

Optionally, that the cloud platform obtains the vehicle trajectory points corresponding to the first work task may alternatively be understood as follows: The cloud platform generates the vehicle trajectory points corresponding to the first work task. For example, when generating the vehicle trajectory points, the cloud platform may first obtain the start point and the end point of the vehicle trajectory points, and then generate the vehicle trajectory points in a drivable area based on the start point and the end point of the vehicle trajectory points according to a search algorithm and a shortest path principle and/or a user-defined principle. Herein, the obtained start point and end point of the vehicle trajectory points may alternatively be understood as a start point and an end point that are entered/selected by the user on the user interface/visual interface.

It may be understood that an obtained vehicle dynamics configuration parameter is associated with a vehicle dynamics configuration parameter corresponding to the vehicle corresponding to the first work task. In other words, a vehicle type of a vehicle corresponding to the obtained vehicle dynamics configuration parameter is the same as that of the vehicle that executes the first work task. For example, the vehicle type may include a Hunan truck, a Shenzhen truck, and a Hangzhou truck.

S102: Construct a virtual lane based on the detection data of the first physical area, the vehicle trajectory points corresponding to the first work task, and the road configuration parameter.

In some feasible implementations, that the cloud platform constructs the virtual lane based on the detection data of the first physical area, the vehicle trajectory points corresponding to the first work task, and the road configuration parameter includes: The cloud platform generates a lane center line of the virtual lane based on the detection data of the first physical area and the vehicle trajectory points corresponding to the first work task, and then constructs the virtual lane based on the lane center line and the road configuration parameter. It should be noted that the constructed virtual lane does not collide with a curb and/or an obstacle corresponding to the detection data of the first physical area. It may be understood that the virtual lane includes a lane line of the virtual lane and/or the lane center line of the virtual lane. For example, FIG. 4 is an example of the virtual lane. The virtual lane corresponds to at least the first work task. Optionally, the virtual lane may further correspond to a vehicle that uses the same lane to execute another work task. It may be understood that, after the virtual lane is generated, the vehicle that executes the first work task may be assisted in implementing autonomous driving on the virtual lane in a subsequent process. Optionally, after the virtual lane is generated, a vehicle that needs to execute another work task on the virtual lane may also be assisted in implementing autonomous driving in a subsequent process.

The generating a lane center line of the virtual lane based on the detection data of the first physical area and the vehicle trajectory points corresponding to the first work task includes: determining a drivable area in the first physical area based on the detection data of the first physical area, and determining the lane center line in the drivable area based on the vehicle trajectory points corresponding to the first work task. The following separately describes in detail the determining a drivable area in the first physical area based on the detection data of the first physical area, and the determining the lane center line in the drivable area based on the vehicle trajectory points corresponding to the first work task.

The determining a drivable area in the first physical area based on the detection data of the first physical area may be understood as determining the drivable area in the first physical area based on the detection data of the first physical area and a semantic expression of the first physical area. For example, the semantic expression of the first physical area may be a grid map or a semantic point cloud. This is not limited herein. For ease of understanding, in subsequent embodiments of this application, the grid map is mainly used as an example for description. For example, the determining a drivable area in the first physical area based on the detection data of the first physical area includes: determining the drivable area in the first physical area on the grid map of the first physical area based on the detection data of the first physical area and the grid map of the first physical area.

Optionally, in an example, the determining the drivable area in the first physical area on the grid map of the first physical area based on the detection data of the first physical area and the grid map of the first physical area includes: extracting road information from the detection data of the first physical area, where the extracted road information includes curb information and/or obstacle information. Therefore, the drivable area in the first physical area may be obtained by projecting the road information to the grid map of the first physical area. Alternatively, it may be specifically understood as that the drivable area that is in the first physical area and that is included in the grid map may be obtained by projecting the road information to the grid map of the first physical area. Optionally, the drivable area that is in the first physical area and that corresponds to the detection data of the first physical area may be further displayed on the user interface/visual interface.

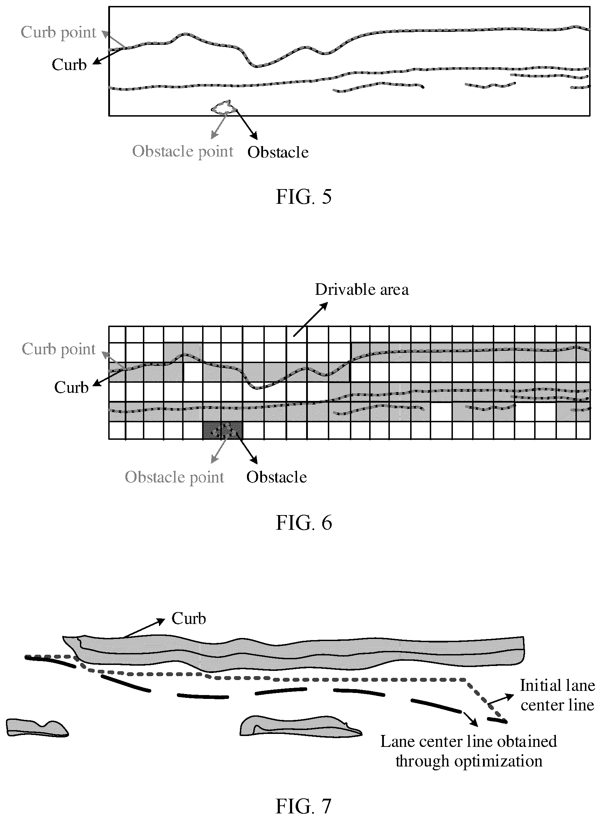

For example, FIG. 5 is a diagram of extracting the road information according to an embodiment of this application. For example, data processing may be performed on the obtained detection data of the first physical area, to extract the road information in the detection data. As shown in FIG. 5, the curb information and the obstacle information may be extracted from the detection data. Expression forms of a curb and an obstacle are zigzag lines. In FIG. 5, a gray point is an extracted curb point/obstacle point, and a black zigzag line is a curb/obstacle formed by curb points/obstacle points.

For example, FIG. 6 is a diagram of the drivable area on the grid map according to an embodiment of this application. As shown in FIG. 6, the curb/obstacle is projected to the grid map, to generate the drivable area. For example, the grid map (for example, a 5×5 grid map in FIG. 6) may be first generated based on a specified center point, length, width, and resolution, and each grid is in an idle state. Then, for the curb represented by the zigzag line and the obstacle represented by a polygon, a plurality of points are inserted between line segments according to an interpolation method to obtain a dense occupation element point set. Then, the occupation element point set is projected to a corresponding grid on the grid map based on a projection relationship, and a grid state is set to be occupied. It may be understood that an area including remaining grids that are in the idle state may be the drivable area.

For example, the determining the lane center line in the drivable area based on the vehicle trajectory points corresponding to the first work task includes: generating an initial lane center line in the drivable area based on the vehicle trajectory points corresponding to the first work task, and then obtaining the lane center line based on the initial lane center line and the vehicle dynamics configuration parameter. The vehicle dynamics configuration parameter includes one or more of the following parameters: a minimum turning radius $R_{min}$, a maximum steering wheel rotation speed $\omega_{mmax}$, and a road surface friction coefficient $\mu$. For example, the vehicle trajectory points corresponding to the first work task may be directly projected to the drivable area, to be used as the initial lane center line in the drivable area, and then the initial lane center line is optimized based on the vehicle dynamics configuration parameter, to obtain the lane center line. The vehicle dynamics configuration parameter in this embodiment of this application may also be a parameter entered/selected by the user on the user interface/visual interface.

It should be noted that the lane center line obtained through optimization satisfies one or more of the following features: A start point of the lane center line is the same as a start point of the vehicle trajectory points corresponding to the first work task; and an end point of the lane center line is the same as an end point of the vehicle trajectory points corresponding to the first work task. In other words, the lane center line satisfies any one of the following features: ① The start point of the lane center line is the same as the start point of the vehicle trajectory points corresponding to the first work task, but the end point of the lane center line is different from the end point of the vehicle trajectory points corresponding to the first work task; ② the start point of the lane center line is different from the start point of the vehicle trajectory points corresponding to the first work task, but the end point of the lane center line is the same as the end point of the vehicle trajectory points corresponding to the first work task; ③ the start point of the lane center line is the same as the start point of the vehicle trajectory points corresponding to the first work task, and the end point of the lane center line is the same as the end point of the vehicle trajectory points corresponding to the first work task; and the like. It should be noted that the foregoing "same" may be understood as "same" within a specific error range. This is not limited herein. Optionally, the lane center line obtained through optimization further needs to satisfy one or more of the following conditions: 1. The lane center line obtained through optimization is as continuous and smooth as possible. 2. The lane center line obtained through optimization does not overlap the obstacle on the grid map, as much as possible. 3. Any location of the lane center line satisfies a vehicle dynamics constraint.

For example, an optimization algorithm is as follows.

1. The following multi-segment polynomial curve is used to optimize the initial lane center line, to obtain the lane center line that better satisfies a vehicle motion constraint, so as to ensure continuity and smoothness of the lane center line.

$$x(t) = f_i(t) = a_{i0} + a_{i1} \times t + a_{i2} \times t^2 + a_{i3} \times t^3 + a_{i4} \times t^4 + a_{i5} \times t^5$$

$$y(t) = g_i(t) = b_{i0} + b_{i1} \times t + b_{i2} \times t^2 + b_{i3} \times t^3 + b_{i4} \times t^4 + b_{i5} \times t^5$$

Herein, x(t) represents an x-axis coordinate of the lane center line, y(t) represents a y-axis coordinate of the lane

center line, $f_i(t)$ is an x-axis coordinate curve equation of an $i^{th}$ segment of the center line, $g_i(t)$ is a y-axis coordinate curve equation of the $i^{th}$ segment of the center line, $t$ is a free variable, $t \in [0, 1]$, and $a_{i0}$ to $a_{i5}$ and $b_{i0}$ to $b_{i5}$ are corresponding coefficients of the polynomial curve equations.

2. A constraint optimization model is established.

(1) The lane center line has no collision constraint. In other words, the lane center line does not overlap with the obstacle on the grid map:

$$Q = \{q = (x(t), y(t)): t \in [0, 1]\} \in Q_{free}$$

Herein, Q represents locations of the x-axis coordinate and the y-axis coordinate of the lane center line, and $Q_{free}$ represents a location in an idle state on the grid map.

(2) The lane center line satisfies the vehicle dynamics constraint (the minimum turning radius $R_{min}$, the maximum steering wheel rotation speed $\omega_{max}$, the road surface friction coefficient $\mu$, and the like).

The minimum turning radius $R_{min}$ may be specified by the user, or obtained through calculation based on the maximum steering wheel rotation speed $\omega_{max}$ and the road surface friction coefficient $\mu$. For example, a calculation method for calculating the minimum turning radius $R_{min}$ based on the maximum steering wheel rotation speed $\omega_{max}$ and the road surface friction coefficient $\mu$ is as follows:

$$R_{min} = \frac{g * \mu}{\omega_{max}}$$

Herein, g is the gravity acceleration.

$$k(t) = \left| \frac{x'(t)y''(t) - x''(t)y'(t)}{(x'(t)^2 + y'(t)^2)^{\frac{3}{2}}} \right| > \frac{1}{R_{min}}, \forall t \in [0, 1]$$

Herein, $k(t)$ represents a curvature of the lane center line. If the curvature $k(t)$ is greater than a reciprocal of the minimum turning radius $R_{min}$, any location of the lane center line satisfies the vehicle dynamics constraint.

(3) Location constraints of the start point and the end point

$$q_s = (x(0), y(0)) = (x_s, y_s)$$

$$q_e = (x(1), y(1)) = (x_e, y_e)$$

Herein, $q_s$ represents a location of the start point of the lane center line, $x_s$ represents an x-axis coordinate of the start point of the vehicle trajectory, $y_s$ represents a y-axis coordinate of the start point of the vehicle trajectory, $q_e$ represents a location of the end point of the lane center line, $x_e$ represents an x-axis coordinate of the end point of the vehicle trajectory, and $y_e$ represents a y-axis coordinate of the end point of the vehicle trajectory. The two formulas are used to ensure that locations of the start point of the lane center line and the end point of the lane center line are respectively consistent with those of the start point and the end point of the vehicle trajectory.

3. An optimization target function is established.

(1) A length cost $C_l$ of the lane center line satisfies:

$$C_l = W_l L = W_l \sum_{i=0}^{n} \int_0^1 \sqrt{1 + (\frac{y'(t)}{x'(t)})^2} dt$$

Herein, $L$ represents a total length of the lane center line, $W_l$ represents a length cost weight, and n represents a total quantity of segments of the polynomial curve of the lane center line. The length cost $C_l$ of the lane center line is minimized, so that a length of the center line in a calculation result can be reduced, to obtain a shorter center line.

(2) A curvature cost $C_s$ of the lane center line satisfies:

$$C_s = W_s \sum_{i=0}^{n} \int_0^1 \left| \frac{x'(t)y''(t) - x''(t)y'(t)}{(x'(t)^2 + y'(t)^2)^{\frac{3}{2}}} \right| dt$$

Herein, $W_s$ represents a curvature cost weight. The curvature cost $C_s$ of the lane center line is minimized, so that a curvature of the lane center line in a calculation result can be reduced, to obtain a smoother lane center line.

(3) The optimization target function C satisfies:

$$C = C_l + C_s$$

The optimization function is minimized, so that an optimal path that satisfies the vehicle dynamics constraint can be obtained. $W_l$ and $W_s$ are respectively the length cost weight and the curvature cost weight, and are used to adjust importance of different costs in the optimization function.

It should be noted that the initial lane center line is optimized by using the constraint optimization model constructed in "2" and the optimization target function defined in "3", so that the lane center line that satisfies the multi-segment polynomial curve defined in "1" can be obtained.

It may be understood that the optimization algorithm used to optimize the initial lane center line may alternatively be another algorithm, and is specifically determined based on an actual scenario. This is not limited herein.

For example, FIG. 7 is a diagram of a scenario of the initial lane center line and the lane center line according to an embodiment of this application. A gray part is the curb or the obstacle. As shown in FIG. 7, the lane center line obtained through optimization by using the vehicle dynamics configuration parameter is smoother and more continuous than the initial lane center line.

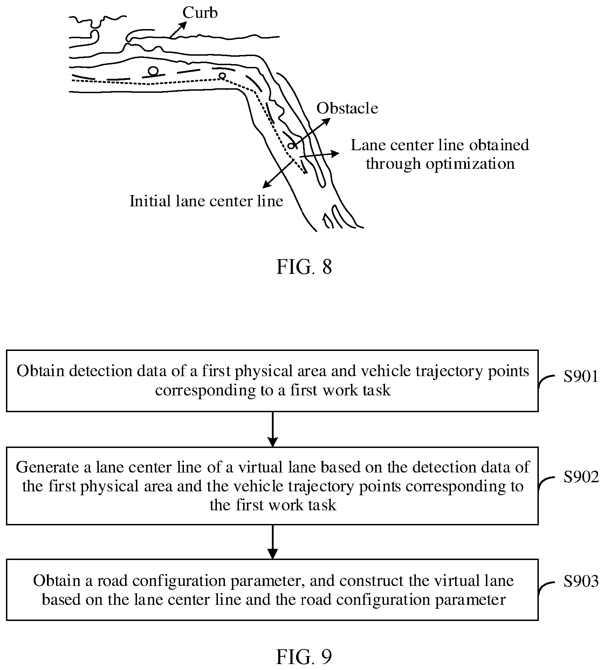

In another example, FIG. 8 is a diagram of another scenario of the initial lane center line and the lane center line according to an embodiment of this application. As shown in FIG. 8, the lane center line obtained through optimization by using the vehicle dynamics configuration parameter is smoother and more continuous than the initial lane center line.

Optionally, in some feasible implementations, the cloud platform may further send first indication information. The first indication information indicates to display the lane line of the virtual lane and/or the lane center line of the virtual lane. In other words, the cloud platform may send the first indication information to the client through the communication port. After receiving the first indication information, the client may display the lane line of the virtual lane and/or the lane center line of the virtual lane on the visual interface of the client.

Optionally, if the cloud platform includes the visual interface, the lane line of the virtual lane and/or the lane center line of the virtual lane may alternatively be directly displayed on the visual interface of the cloud platform.

In this embodiment of this application, in an open road scenario like a mining area, when there is no real lane line, a collision-free virtual lane can be automatically generated based on the foregoing procedure. This helps reduce pressure of a vehicle-end autonomous driving algorithm. In addition, the vehicle dynamics constraint is considered for the virtual lane generated according to this method. This is more conducive to vehicle control when a vehicle end actually uses a map.

FIG. 9 is another schematic flowchart of a virtual lane generation method according to an embodiment of this application. The method is performed by a controller or a server. The controller or the server herein may be a cloud platform, a cloud server, or the like. This is not limited herein. For ease of description, in the following descriptions, an example in which the controller or the server is a cloud platform is used for description. The method may include the following step S901 to step S903.

S901: Obtain detection data of a first physical area and vehicle trajectory points corresponding to a first work task.

Herein, for an understanding of S901, refer to related descriptions of obtaining the detection data of the first physical area and the vehicle trajectory points corresponding to the first work task in step S101 in FIG. 1. Details are not described herein again.

S902: Generate a lane center line of a virtual lane based on the detection data of the first physical area and the vehicle trajectory points corresponding to the first work task.

Herein, for an understanding of S902, refer to related descriptions of generating the lane center line of the virtual lane based on the detection data of the first physical area and the vehicle trajectory points corresponding to the first work task in step S102 in FIG. 1. Details are not described herein again.

S903: Obtain a road configuration parameter, and construct the virtual lane based on the lane center line and the road configuration parameter.

Herein, for an understanding of S903, refer to related descriptions of obtaining the road configuration parameter and constructing the virtual lane based on the lane center line and the road configuration parameter in step S101 and step S102 in FIG. 1. Details are not described herein again.

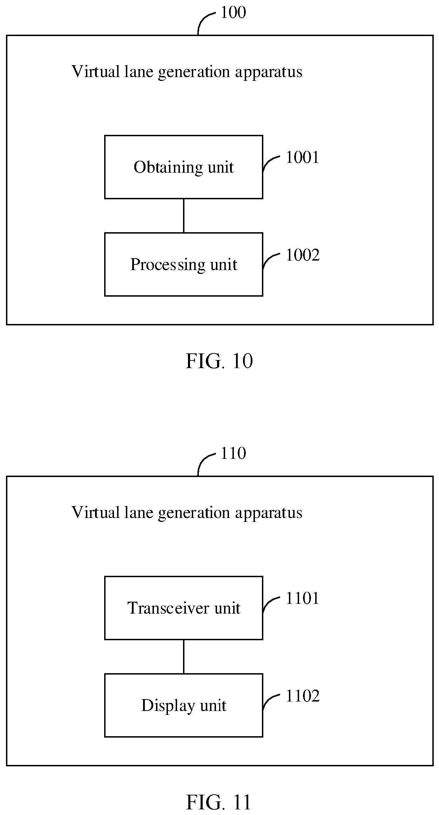

The following describes in detail a virtual lane generation apparatus provided in this application with reference to FIG. 10 and FIG. 11.

FIG. 10 is a diagram of a possible structure of a virtual lane generation apparatus according to an embodiment of this application.

Optionally, the virtual lane generation apparatus 100 may be an independent device like a mobile terminal, a server, or a cloud platform, or may be a component included in an independent device, for example, a chip, a software module, or an integrated circuit. The virtual lane generation apparatus 100 is configured to implement the foregoing virtual lane generation method, for example, the virtual lane generation method in the embodiment shown in FIG. 1 and/or the virtual lane generation method in the embodiment shown in FIG. 9.

In a possible implementation, the virtual lane generation apparatus 100 may include an obtaining unit 1001 and a processing unit 1002.

The obtaining unit 1001 is configured to obtain detection data of a first physical area, vehicle trajectory points corresponding to a first work task, and a road configuration parameter.

The processing unit 1002 is configured to construct a virtual lane based on the detection data of the first physical area, the vehicle trajectory points corresponding to the first work task, and the road configuration parameter, where the virtual lane corresponds to at least the first work task.

In a possible implementation, when constructing the virtual lane based on the detection data of the first physical area, the vehicle trajectory points corresponding to the first work task, and the road configuration parameter, the processing unit 1002 is configured to:

   generate a lane center line of the virtual lane based on the detection data of the first physical area and the vehicle trajectory points corresponding to the first work task; and
   construct the virtual lane based on the lane center line and the road configuration parameter.

In a possible implementation, when generating the lane center line of the virtual lane based on the detection data of the first physical area and the vehicle trajectory points corresponding to the first work task, the processing unit 1002 is configured to:

   determine a drivable area in the first physical area based on the detection data of the first physical area; and
   determine the lane center line in the drivable area based on the vehicle trajectory points corresponding to the first work task.

In a possible implementation, when determining the drivable area in the first physical area based on the detection data of the first physical area, the processing unit 1002 is configured to:
determine the drivable area in the first physical area on a grid map of the first physical area based on the detection data of the first physical area and the grid map of the first physical area.

In a possible implementation, when determining the drivable area in the first physical area on the grid map of the first physical area based on the detection data of the first physical area and the grid map of the first physical area, the processing unit 1002 is configured to:

   extract road information from the detection data of the first physical area, where the road information includes curb information and/or obstacle information; and
   project the road information to the grid map of the first physical area, to obtain the drivable area in the first physical area.

In a possible implementation, when determining the lane center line in the drivable area based on the vehicle trajectory points corresponding to the first work task, the processing unit 1002 is configured to:

   generate an initial lane center line in the drivable area based on the vehicle trajectory points corresponding to the first work task; and
   obtain the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In a possible implementation, the lane center line satisfies one or more of the following features:
a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, when obtaining the vehicle trajectory points corresponding to the first work task, the obtaining unit 1001 is configured to:

obtain the vehicle trajectory points that are entered by a user and that correspond to the first work task; or
generate the vehicle trajectory points corresponding to the first work task.

In a possible implementation, when obtaining the road configuration parameter, the obtaining unit 1001 is configured to:

obtain the road configuration parameter entered by a user.

In a possible implementation, the road configuration parameter includes one or more of the following:

a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the apparatus further includes:

a transceiver unit, configured to send first indication information, where the first indication information indicates to display a lane line of the virtual lane and/or the lane center line of the virtual lane.

In a possible implementation, the virtual lane includes the lane line of the virtual lane and the lane center line of the virtual lane.

In another possible implementation, the virtual lane generation apparatus 100 may include an obtaining unit 1001 and a processing unit 1002.

The obtaining unit 1001 is configured to obtain detection data of a first physical area and vehicle trajectory points corresponding to a first work task.

The processing unit 1002 is configured to generate a lane center line of a virtual lane based on the detection data of the first physical area and the vehicle trajectory points corresponding to the first work task.

In a possible implementation, the obtaining unit 1001 is further configured to obtain a road configuration parameter.

The processing unit 1002 is further configured to construct the virtual lane based on the lane center line and the road configuration parameter, where the virtual lane corresponds to at least the first work task.

In a possible implementation, when generating the lane center line of the virtual lane based on the detection data of the first physical area and the vehicle trajectory points corresponding to the first work task, the processing unit 1002 is configured to:

determine a drivable area in the first physical area based on the detection data of the first physical area; and
determine the lane center line in the drivable area based on the vehicle trajectory points corresponding to the first work task.

In a possible implementation, when determining the drivable area in the first physical area based on the detection data of the first physical area, the processing unit 1002 is configured to:

determine the drivable area in the first physical area on a grid map of the first physical area based on the detection data of the first physical area and the grid map of the first physical area.

In a possible implementation, when determining the drivable area in the first physical area on the grid map of the first physical area based on the detection data of the first physical area and the grid map of the first physical area, the processing unit 1002 is configured to:

extract road information from the detection data of the first physical area, where the road information includes curb information and/or obstacle information; and
project the road information to the grid map of the first physical area, to obtain the drivable area in the first physical area.

In a possible implementation, when determining the lane center line in the drivable area based on the vehicle trajectory points corresponding to the first work task, the processing unit 1002 is configured to:

generate an initial lane center line in the drivable area based on the vehicle trajectory points corresponding to the first work task; and

obtain the lane center line based on the initial lane center line and a vehicle dynamics configuration parameter, where the vehicle dynamics configuration parameter includes one or more of the following parameters: a minimum turning radius $R_{min}$, a maximum steering wheel rotation speed $\omega_{mmax}$, and a road surface friction coefficient $\mu$.

In a possible implementation, the lane center line satisfies one or more of the following features:
a start point of the lane center line is the same as a start point of the vehicle trajectory points corresponding to the first work task; and an end point of the lane center line is the same as an end point of the vehicle trajectory points corresponding to the first work task.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, when obtaining the vehicle trajectory points corresponding to the first work task, the obtaining unit 1001 is configured to:

obtain the vehicle trajectory points that are entered by a user and that correspond to the first work task; or
generate the vehicle trajectory points corresponding to the first work task.

In a possible implementation, when obtaining the road configuration parameter, the obtaining unit 1001 is configured to:
obtain the road configuration parameter entered by a user.

In a possible implementation, the road configuration parameter includes one or more of the following:
a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

In a possible implementation, the apparatus further includes:
a transceiver unit, configured to send first indication information, where the first indication information indicates to display a lane line of the virtual lane and/or the lane center line of the virtual lane.

In a possible implementation, the virtual lane includes the lane line of the virtual lane and the lane center line of the virtual lane.

For another possible implementation of the apparatus, refer to related descriptions of the cloud platform in the method embodiments corresponding to FIG. 1 and/or FIG. 9. Details are not described herein again.

FIG. 11 is a diagram of another possible structure of a virtual lane generation apparatus according to an embodiment of this application. Optionally, the virtual lane generation apparatus 110 may be an independent device like a client, or may be a component included in an independent device, for example, a chip, a software module, or an integrated circuit. The virtual lane generation apparatus 110 is configured to implement the foregoing virtual lane generation method, for example, the virtual lane generation method in the embodiment shown in FIG. 1 and/or the virtual lane generation method in the embodiment shown in FIG. 9.

The virtual lane generation apparatus may include a transceiver unit 1101 and a display unit 1102.

The transceiver unit 1101 is configured to receive a road configuration parameter entered by a user, where the road configuration parameter is used to construct a virtual lane corresponding to a first work task.

The transceiver unit 1101 is configured to send the road configuration parameter to obtain the virtual lane.

The display unit 1102 is configured to display a lane line of the virtual lane and/or a lane center line of the virtual lane.

In a possible implementation, the virtual lane is associated with the road configuration parameter, detection data of a first physical area, and vehicle trajectory points corresponding to the first work task.

In a possible implementation, the lane center line of the virtual lane is associated with the detection data of the first physical area and the vehicle trajectory points corresponding to the first work task.

In a possible implementation, the transceiver unit 1101 is further configured to:

receive the vehicle trajectory points that are entered by the user and that correspond to the first work task; and
send the vehicle trajectory points corresponding to the first work task.

In a possible implementation, the display unit 1102 is further configured to:
display a drivable area that is of the first physical area and that corresponds to the detection data of the first physical area, where the drivable area is used to determine the lane center line of the virtual lane.

In a possible implementation, the transceiver unit 1101 is further configured to:

receive a vehicle dynamics configuration parameter entered by the user, where the vehicle dynamics configuration parameter includes one or more of the following parameters: a minimum turning radius $R_{min}$, a maximum steering wheel rotation speed $\omega_{mmax}$, and a road surface friction coefficient $\mu$, and the vehicle dynamics configuration parameter is used to determine the lane center line; and
send the vehicle dynamics configuration parameter.

In a possible implementation, the virtual lane does not collide with a curb and/or an obstacle corresponding to the detection data of the first physical area.

In a possible implementation, the detection data of the first physical area includes image data and/or point cloud data of the first physical area.

In a possible implementation, the road configuration parameter includes one or more of the following: a lane width, a lane quantity, a road driving direction, a road type, an upper limit of a lane length, a lower limit of a road turning radius, and a lane speed limit.

The road driving direction includes driving left or driving right, and the road type includes a one-way road or a two-way road.

For another possible implementation of the apparatus, refer to related descriptions of the client in the method embodiments corresponding to FIG. 1 and/or FIG. 9. Details are not described herein again.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship of elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All the units of the apparatus may be implemented in a form of software invoked by a processor, or may be implemented in a form of a hardware circuit. Alternatively, some of the units are implemented in a form of software invoked by a processor, and the remaining units are implemented in a form of a hardware circuit.

In this embodiment of this application, the processor is a circuit that has a signal processing capability. In an implementation, the processor may be a circuit that has an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the apparatus may be configured as one or more processors (or processing circuits) for implementing the foregoing methods, for example, CPUs, GPUs, NPUs, TPUs, DPUs, microprocessors, DSPs, ASICs, FPGAs, or a combination of at least two of these processor forms.

In addition, all or some of the units in the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement the functions of the units of the apparatus. Types of the at least one processor may be different, for example, include a CPU and an FPGA, a CPU and an artificial intelligence processor, or a CPU and a GPU.

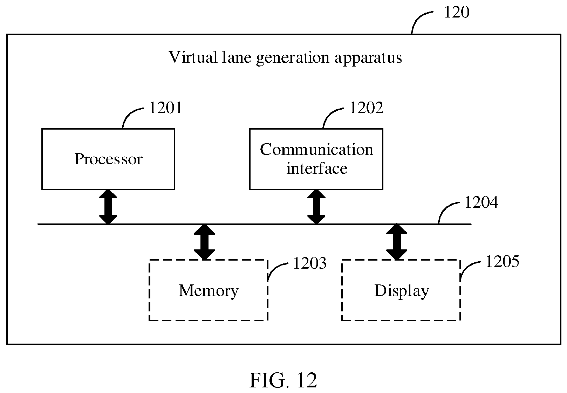

For example, FIG. 12 is a diagram of another possible structure of a virtual lane generation apparatus according to an embodiment of this application.

The virtual lane generation apparatus 120 may be an independent device like a mobile terminal, a server, or a cloud platform, or may be a component included in an independent device, for example, a chip, a software module, or an integrated circuit. The virtual lane generation apparatus 120 may include at least one processor 1201 and a communication interface 1202. Optionally, at least one memory 1203 may be further included. Optionally, at least one display 1205 may be further included. Further, optionally, a connection line 1204 may be further included. The processor 1201, the communication interface 1202, the memory 1203, and/or the display 1205 are connected through the connection line 1204, and communicate with each other through the connection line 1204 to transfer a control signal and/or a data signal. Details are as follows:

(1) The processor 1201 is a module for performing an arithmetic operation and/or a logical operation, and may specifically include one or more of the following apparatuses: a central processing unit (central processing unit, CPU), a microcontroller unit (microcontroller unit, MCU), an application processor (application processor, AP), a time-to-digital converter (time-to-digital converter, TDC), an electronic control unit (electronic control unit, ECU), a filter, a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor (assisting the central processing unit in completing corresponding processing and application), a neural-network processing unit (neural-network processing unit, NPU), and/or the like.

(2) The communication interface 1202 may be configured to provide an information input or output for the at least one processor. In some possible scenarios, the communication interface 1202 may include an interface circuit, and/or the communication interface 1202 may be configured to receive data sent from the outside and/or send data to the outside. For example, the communication interface 1202 may be a wired link interface including an Ethernet cable and the like, or may be a wireless link (Wi-Fi, Bluetooth, universal wireless transmission, an onboard short-range communication technology, another short-range wireless communication technology, or the like) interface. Optionally, the communication interface 1202 may further include a transmitter (for example, a radio frequency transmitter or an antenna), a receiver, or the like coupled to the interface.

Optionally, if the virtual lane generation apparatus 120 is an independent device, the communication interface 1202 may include a receiver and a transmitter. The receiver and the transmitter may be a same component or different components. When the receiver and the transmitter are a same component, the component may be referred to as a transceiver.

Optionally, if the virtual lane generation apparatus 120 is a chip or a circuit, the communication interface 1202 may include an input interface and an output interface. The input interface and the output interface may be a same interface or different interfaces.

Optionally, a function of the communication interface 1202 may be implemented through a transceiver circuit or a dedicated transceiver chip. The processor 1201 may be implemented by a dedicated processing chip, a processing circuit, a processor, or a general-purpose chip.

(3) The memory 1203 is configured to provide storage space, and the storage space may store data such as an operating system and a computer program. The memory 1203 may be one or a combination of a random-access memory (random-access memory, RAM), a read-only memory (read-only memory, ROM), an erasable programmable read-only memory (erasable programmable read-only memory, EPROM), a compact disc read-only memory (compact disc read-only memory, CD-ROM), and the like.

The foregoing enumerated functions and actions of the modules or units in the virtual lane generation apparatus 120 are merely examples for description.

Functional units in the virtual lane generation apparatus 120 may be configured to implement the foregoing virtual lane generation method, for example, the method described in the embodiment shown in FIG. 1 and/or the method described in the embodiment shown in FIG. 9. Herein, detailed descriptions are omitted to avoid repetition.

Optionally, the processor 1201 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the computing device includes the at least one memory 1203, if the processor 1201 invokes a computer program to implement the foregoing method, the computer program may be stored in the memory 1203.

Optionally, the display 1205 may be configured to display a lane line of a virtual lane and/or a lane center line of the virtual lane, and other information that needs to be displayed to a user.

An embodiment of this application further provides a chip system. The chip system includes a processor and a communication interface. The communication interface is configured to receive and/or send data, and/or the communication interface is configured to provide an input and/or output for the processor. The chip system is configured to implement the foregoing virtual lane generation method, for example, the method in FIG. 1 and/or the method in FIG. 9.

An embodiment of this application further provides a computer-readable storage medium. The computer-readable storage medium stores instructions. When the instructions are run on a computing device, the computing device is enabled to implement the foregoing virtual lane generation method, for example, the method in FIG. 1 and/or the method in FIG. 9.

An embodiment of this application further provides a terminal/server/cloud server (or referred to as a cloud platform). The terminal/server/cloud server is configured to implement the foregoing virtual lane generation method, for example, the method in FIG. 1 and/or the method in FIG. 9.

An embodiment of this application further provides a client. The client is configured to implement the foregoing virtual lane generation method, for example, the method in FIG. 1 and/or the method in FIG. 9.

An embodiment of this application further provides a computer program product. The computer program product includes computer instructions, and when the computer instructions are executed by a computing device, the foregoing virtual lane generation method is implemented.

In embodiments of this application, words such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" used in embodiments of this application are for differentiation between a plurality of objects, and are not intended to limit a sequence, a time sequence, priorities, or importance degrees of the plurality of objects. For example, a first device and a second device are merely for ease of description, and do not indicate a difference of the first device and the second device in terms of a structure and an importance degree. In some embodiments, the first device and the second device may alternatively be a same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application. A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

**Claims**

1. A virtual lane generation method, comprising:

   obtaining detection data of a first physical area, vehicle trajectory points corresponding to a first work task, and a road configuration parameter; and
   constructing a virtual lane based on the detection data of the first physical area, the vehicle trajectory points corresponding to the first work task, and the road configuration parameter, wherein the virtual lane corresponds to at least the first work task.

2. The method according to claim 1, wherein the constructing a virtual lane based on the detection data of the first physical area, the vehicle trajectory points corresponding to the first work task, and the road configuration parameter comprises:

   generating a lane center line of the virtual lane based on the detection data of the first physical area and the vehicle trajectory points corresponding to the first work task; and
constructing the virtual lane based on the lane center line and the road configuration parameter.

3. The method according to claim 2, wherein the generating a lane center line of the virtual lane based on the detection data of the first physical area and the vehicle trajectory points corresponding to the first work task comprises:

   determining a drivable area in the first physical area based on the detection data of the first physical area; and
   determining the lane center line in the drivable area based on the vehicle trajectory points corresponding to the first work task.

4. The method according to claim 3, wherein the determining a drivable area in the first physical area based on the detection data of the first physical area comprises:
   determining the drivable area in the first physical area on a grid map of the first physical area based on the detection data of the first physical area and the grid map of the first physical area.

5. The method according to claim 4, wherein the determining the drivable area in the first physical area on a grid map of the first physical area based on the detection data of the first physical area and the grid map of the first physical area comprises:

   extracting road information from the detection data of the first physical area, wherein the road information comprises curb information and/or obstacle information; and
   projecting the road information to the grid map of the first physical area, to obtain the drivable area in the first physical area.

6. The method according to any one of claims 3 to 5, wherein the determining the lane center line in the drivable area based on the vehicle trajectory points corresponding to the first work task comprises:

   generating an initial lane center line in the drivable area based on the vehicle trajectory points corresponding to the first work task; and
   obtaining the lane center line based on the initial lane center line and a vehicle dynamics configuration parameter, wherein the vehicle dynamics configuration parameter comprises one or more of the following parameters: a minimum turning radius $R_{min}$, a maximum steering wheel rotation speed $\omega_{mmax}$, and a road surface friction coefficient $\mu$.

7. The method according to any one of claims 2 to 6, wherein the lane center line satisfies one or more of the following features:
   a start point of the lane center line is the same as a start point of the vehicle trajectory points corresponding to the first work task; and an end point of the lane center line is the same as an end point of the vehicle trajectory points corresponding to the first work task.

8. The method according to any one of claims 1 to 7, wherein the virtual lane does not collide with a curb and/or an obstacle corresponding to the detection data of the first physical area.

9. The method according to any one of claims 1 to 8, wherein the detection data of the first physical area comprises image data and/or point cloud data of the first physical area.

10. The method according to any one of claims 1 to 9, wherein the obtaining vehicle trajectory points corresponding to a first work task comprises:

    obtaining the vehicle trajectory points that are entered by a user and that correspond to the first work task; or
    generating the vehicle trajectory points corresponding to the first work task.

11. The method according to any one of claims 1 to 9, wherein the obtaining a road configuration parameter comprises:
    obtaining the road configuration parameter entered by a user.

12. The method according to any one of claims 1 to 11, wherein the road configuration parameter comprises one or more of the following:

a lane width, a lane quantity, a road driving direction, a road type, an upper limit of a lane length, a lower limit of a road turning radius, and a lane speed limit, wherein
the road driving direction comprises driving left or driving right, and the road type comprises a one-way road or a two-way road.

13. The method according to any one of claims 1 to 12, wherein the method further comprises:
sending first indication information, wherein the first indication information indicates to display a lane line of the virtual lane and/or the lane center line of the virtual lane.

14. The method according to any one of claims 1 to 13, wherein the virtual lane comprises the lane line of the virtual lane and the lane center line of the virtual lane.

15. A virtual lane generation apparatus, comprising:

an obtaining unit, configured to obtain detection data of a first physical area, vehicle trajectory points corresponding to a first work task, and a road configuration parameter; and
a processing unit, configured to construct a virtual lane based on the detection data of the first physical area, the vehicle trajectory points corresponding to the first work task, and the road configuration parameter, wherein the virtual lane corresponds to at least the first work task.

16. The apparatus according to claim 15, wherein when constructing the virtual lane based on the detection data of the first physical area, the vehicle trajectory points corresponding to the first work task, and the road configuration parameter, the processing unit is configured to:

generate a lane center line of the virtual lane based on the detection data of the first physical area and the vehicle trajectory points corresponding to the first work task; and
construct the virtual lane based on the lane center line and the road configuration parameter.

17. The apparatus according to claim 16, wherein when generating the lane center line of the virtual lane based on the detection data of the first physical area and the vehicle trajectory points corresponding to the first work task, the processing unit is configured to:

determine a drivable area in the first physical area based on the detection data of the first physical area; and
determine the lane center line in the drivable area based on the vehicle trajectory points corresponding to the first work task.

18. The apparatus according to claim 17, wherein when determining the drivable area in the first physical area based on the detection data of the first physical area, the processing unit is configured to:
determine the drivable area in the first physical area on a grid map of the first physical area based on the detection data of the first physical area and the grid map of the first physical area.

19. The apparatus according to claim 18, wherein when determining the drivable area in the first physical area on the grid map of the first physical area based on the detection data of the first physical area and the grid map of the first physical area, the processing unit is configured to:

extract road information from the detection data of the first physical area, wherein the road information comprises curb information and/or obstacle information; and
project the road information to the grid map of the first physical area, to obtain the drivable area in the first physical area.

20. The apparatus according to any one of claims 17 to 19, wherein when determining the lane center line in the drivable area based on the vehicle trajectory points corresponding to the first work task, the processing unit is configured to:

generate an initial lane center line in the drivable area based on the vehicle trajectory points corresponding to the first work task; and
obtain the lane center line based on the initial lane center line and a vehicle dynamics configuration parameter, wherein the vehicle dynamics configuration parameter comprises one or more of the following parameters: a minimum turning radius $R_{min}$, a maximum steering wheel rotation speed $\omega_{mmax}$, and a road surface friction

coefficient $\mu$.

21. The apparatus according to any one of claims 16 to 20, wherein the lane center line satisfies one or more of the following features:

a start point of the lane center line is the same as a start point of the vehicle trajectory points corresponding to the first work task; and an end point of the lane center line is the same as an end point of the vehicle trajectory points corresponding to the first work task.

22. The apparatus according to any one of claims 15 to 21, wherein the virtual lane does not collide with a curb and/or an obstacle corresponding to the detection data of the first physical area.

23. The apparatus according to any one of claims 1 to 8, wherein the detection data of the first physical area comprises image data and/or point cloud data of the first physical area.

24. The apparatus according to any one of claims 1 to 9, wherein when obtaining the vehicle trajectory points corresponding to the first work task, the obtaining unit is configured to:

obtain the vehicle trajectory points that are entered by a user and that correspond to the first work task; or generate the vehicle trajectory points corresponding to the first work task.

25. The apparatus according to any one of claims 1 to 9, wherein when obtaining the road configuration parameter, the obtaining unit is configured to:
obtain the road configuration parameter entered by a user.

26. The apparatus according to any one of claims 1 to 11, wherein the road configuration parameter comprises one or more of the following:

a lane width, a lane quantity, a road driving direction, a road type, an upper limit of a lane length, a lower limit of a road turning radius, and a lane speed limit, wherein
the road driving direction comprises driving left or driving right, and the road type comprises a one-way road or a two-way road.

27. The apparatus according to any one of claims 1 to 12, wherein the apparatus further comprises:
a transceiver unit, configured to send first indication information, wherein the first indication information indicates to display a lane line of the virtual lane and/or the lane center line of the virtual lane.

28. A virtual lane generation apparatus, wherein the virtual lane generation apparatus comprises a processor; and when the processor invokes a computer program or instructions in a memory, the method according to any one of claims 1 to 14 is performed.

29. A computer-readable storage medium, wherein the computer-readable storage medium is configured to store instructions or a computer program; and
when the instructions or the computer program is executed, the method according to any one of claims 1 to 14 is implemented.

30. A computer program product, comprising instructions or a computer program, wherein
when the instructions or the computer program is executed, the method according to any one of claims 1 to 14 is implemented.

Obtain detection data of a first physical area, vehicle trajectory points corresponding to a first work task, and a road configuration parameter ⌐ S101

Construct a virtual lane based on the detection data of the first physical area, the vehicle trajectory points corresponding to the first work task, and the road configuration parameter ⌐ S102

FIG. 1

Road configuration parameter interface

Road type          ○ One-way road     ◉ Two-way road

Road driving direction    ○ Driving left     ◉ Driving right

| Upper limit of a road length | – | 100 | + | meters |
| Lower limit of a road turning radius | – | 12 | + | meters |
| Lane speed limit | – | 25 | + | kilometers per hour |
| Lane width | – | 6 | + | meters |
| Lane quantity | – | 2 | + | lanes |

FIG. 2

Vehicle trajectory selection interface

Start point of the vehicle trajectory

Vehicle trajectory 1

Vehicle trajectory 2

Vehicle trajectory information

☑ 2022-09-28-08:25:26 Vehicle trajectory 1
☑ 2022-09-28-08:30:01 Vehicle trajectory 2

End point of the vehicle trajectory

FIG. 3

Curb

Lane line of a virtual lane

Lane center line

Lane line of the virtual lane

FIG. 4

Curb point

Curb

Obstacle point  Obstacle

FIG. 5

Drivable area

Curb point

Curb

Obstacle point  Obstacle

FIG. 6

Curb

Initial lane
center line

Lane center line obtained
through optimization

FIG. 7

Curb

Obstacle

Lane center line obtained
through optimization

Initial lane center line

FIG. 8

| Obtain detection data of a first physical area and vehicle trajectory points corresponding to a first work task | S901 |
| Generate a lane center line of a virtual lane based on the detection data of the first physical area and the vehicle trajectory points corresponding to the first work task | S902 |
| Obtain a road configuration parameter, and construct the virtual lane based on the lane center line and the road configuration parameter | S903 |

FIG. 9

100

Virtual lane generation apparatus

Obtaining unit 1001

Processing unit 1002

FIG. 10

110

Virtual lane generation apparatus

Transceiver unit 1101

Display unit 1102

FIG. 11

120

Virtual lane generation apparatus

1201

Processor

1202

Communication interface

1204

1203

Memory

1205

Display

FIG. 12

## INTERNATIONAL SEARCH REPORT

International application No.

**PCT/CN2023/127607**

### A. CLASSIFICATION OF SUBJECT MATTER

G06T11/20(2006.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNTXT, ENTXT, ENTXTC, CNKI: 车道线, 轨迹点, 电子地图, 道路, 车辆, 区域, 虚拟, 障碍, 栅格, virtual, roadway, vehicle, lane, region

### C. DOCUMENTS CONSIDERED TO BE RELEVANT

| Category* | Citation of document, with indication, where appropriate, of the relevant passages | Relevant to claim No. |
|---|---|---|
| X | CN 112150632 A (BEIJING YIKONG ZHIJIA TECHNOLOGY CO., LTD.) 29 December 2020 (2020-12-29)<br>description, paragraphs [0033]-[0085], and figures 1-7 | 1-30 |
| A | CN 113252062 A (ZHIDAO NETWORK TECHNOLOGY (BEIJING) CO., LTD.) 13 August 2021 (2021-08-13)<br>entire document | 1-30 |
| A | CN 110136222 A (BAIDU ONLINE NETWORK TECHNOLOGY (BEIJING) CO., LTD.) 16 August 2019 (2019-08-16)<br>entire document | 1-30 |
| A | US 2020064846 A1 (GM GLOBAL TECHNOLOGY OPERATIONS LLC) 27 February 2020 (2020-02-27)<br>entire document | 1-30 |
| A | EP 4063792 A2 (APOLLO INTELLIGENT CONNECTIVITY (BEIJING) TECHNOLOGY CO., LTD.) 28 September 2022 (2022-09-28)<br>entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 January 2024** | **15 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/127607**

| Patent document cited in search report | | | Publication date (day/month/year) | Patent family member(s) | | | Publication date (day/month/year) |
|---|---|---|---|---|---|---|---|
| CN | 112150632 | A | 29 December 2020 | None | | | |
| CN | 113252062 | A | 13 August 2021 | CN | 113252062 | B | 10 December 2021 |
| CN | 110136222 | A | 16 August 2019 | CN | 110136222 | B | 26 May 2023 |
| US | 2020064846 | A1 | 27 February 2020 | DE | 102019114527 | A1 | 27 February 2020 |
| | | | | US | 10761535 | B2 | 01 September 2020 |
| | | | | CN | 110888426 | A | 17 March 2020 |
| | | | | CN | 110888426 | B | 06 June 2023 |
| EP | 4063792 | A2 | 28 September 2022 | JP | 2022110069 | A | 28 July 2022 |
| | | | | KR | 20220091440 | A | 30 June 2022 |
| | | | | EP | 4063792 | A3 | 21 December 2022 |
| | | | | CN | 113569378 | A | 29 October 2021 |

Form PCT/ISA/210 (patent family annex) (July 2022)

**REFERENCES CITED IN THE DESCRIPTION**

**Patent documents cited in the description**

- CN 202211350487